# EUROPEAN PATENT SPECIFICATION

(11) **EP 1 338 623 B1**
(45) Date of publication and mention of the grant of the patent: **09.04.2008**
(21) Application number: 03076526.7
(22) Date of filing: 15.07.1999
(51) Int. Cl.: C08L 23/16, C08L 23/28, C08L 23/34, C08L 71/03

(54) **Process for rapidly curing elastomer composition by UV radiation**
Verfahren zur schnellen Vernetzung einer Elastomerzusammensetzung mittels UV-Strahlung
Procédé de durcissement rapide d'une composition elastomère par rayons UV

(43) Date of publication of application: 27.08.2003
(62) Divisional of application: 99935585.2
(73) Proprietor: DuPont Performance Elastomers L.L.C., Wilmington, DE 19809 (US)
(72) Inventor: Ruepping, Christian, Corsier 1246 (CH)
(74) Representative: Cockerton, Bruce Roger

(56) References cited:
- PATENT ABSTRACTS OF JAPAN vol. 006, no. 229 (P-155), 16 November 1982 (1982-11-16) & JP 57 129442 A (TORAY KK), 11 August 1982 (1982-08-11)
- PATENT ABSTRACTS OF JAPAN vol. 016, no. 413 (C-0980), 2 September 1992 (1992-09-02) & JP 04 142322 A (TOUYOU KASEI KOUGIYOU KK), 15 May 1992 (1992-05-15)
- PATENT ABSTRACTS OF JAPAN vol. 007, no. 285 (C-201), 20 December 1983 (1983-12-20) & JP 58 162640 A (KANSAI PAINT KK), 27 September 1983 (1983-09-27)
- PATENT ABSTRACTS OF JAPAN vol. 006, no. 019 (C-090), 3 February 1982 (1982-02-03) & JP 56 143284 A (MINAMIURA KINZOKU KOGYOSHO:KK;OTHERS: 01), 7 November 1981 (1981-11-07)

## Description

### FIELD OF THE INVENTION

This invention relates to a process for curing elastomeric seals rapidly, wherein the seals are formed by applying an uncured polymer composition directly onto a sealing element or a surface to be sealed.

### BACKGROUND OF THE INVENTION

Elastomeric compositions require a vulcanization, i.e. curing, step in order to develop the crosslinked network structure which confers optimum rubbery properties to such compositions. Typically, the curing processes are based on compression molding or transfer molding techniques wherein an elastomer, fully compounded with curing agent and other additives, is introduced into a mold that is then heated under pressure. The elevated temperatures used during the molding process cause chemical reaction of the elastomer and curative, thereby producing a crosslinked product.

The particular raw (i.e. uncured) elastomer used to manufacture a synthetic rubber article will be selected with reference to the specific end use application and environment under which the finished article must function. For example, one will select different elastomers from among ethylene alkyl acrylate copolymer rubbers, ethylene alpha-oiefin copolymer elastomers, fluoroelastomers and chlorinated elastomers depending upon whether the finished article will be exposed to oils, water, fuels, acids or bases. One will also consider the temperature range to which the article will be subjected and special requirements such as flame resistance. In addition, consideration will be given to the cure characteristics of the polymer and the ease with which defect-free parts can be produced.

The majority of elastomeric seals manufactured on a commercial scale are crosslinked at high temperature in molding processes. Generally, elastomeric seals and gaskets thus produced arc manually fitted onto an article to be sealed. Alternatively, adhesives are sometimes utilized to attach the cured sealing member to an article. Such attachment techniques are not completely satisfactory in all cases. In particular, manual methods are time consuming and adhesives can affect the physical properties of the seal.

Elastomeric gaskets are often utilized as scaling members for grooved parts, such as rocker covers and air intake manifolds, that are used in automobile engines. Such gaskets must be resistant to the effects of heat and oil. Traditionally, cured, oil-resistant elastomer compositions, such as ethylene alkyl acrylate copolymer rubbers, have been manually introduced into the groove of a metal part. Many automotive components are now formed from high performance thermoplastic materials, rather than from metal. Manual fitting of elastomeric seals onto these components is time-consuming, but curing the seal in place is impractical because either the cure temperature or, in some cases, the post cure temperature, is usually high enough to cause deformation of the thermoplastic. Yet, if the cure temperature is lowered, cure rate is too slow to be practical. Oil or fuel resistant elastomeric compositions that could be readily applied to an article or groove in their uncured state and that are adapted to low temperature curing techniques would therefore be especially useful in manufacture of thermoplastic articles having attached sealing members for automotive or industrial uses.

Low temperature curing processes that are initiated by high energy radiation, such as electron beam or γ-radiation, are known for use with almost any elastomer, including ethylene acrylate copolymer elastomers. For example, electron beam crosslinking of wire and cable insulation compositions, including elastomeric compositions, is disclosed in E. Brandt and A. Berejka, Electron Beam Crosslinking of Wire and Cable Insulation, Rubber World, 49, Nov. 1978. Eldred, in U.S. Patent 3,950,238, discloses the use of electron beam radiation to cure acrylonitrile butadiene polymers and Clarke, in U.S. Patent 4,275,180, discloses the use of electron beam radiation cure of a blend of an ethylene acrylate copolymer rubber and a thermoplastic polymer, e.g. for cable jacketing. Electron beam cures have the disadvantage of requiring quite complex and expensive equipment for generating high energy particles. It would therefore be advantageous to have available a low temperature curing process that did not rely on the use of electron beam radiation. Low temperature UV cures of a variety of polymers, including ethylene acrylate polymers, are disclosed in U.S. Patent 4,863,536. However, me disclosed process involves dissolution of the particular polymer in an acrylate monomer and is not suitable for preparation of general rubber goods, such as gaskets and seals.

In addition to having available an effective low temperature cure process for ethylene acrylate copolymer elastomers, it would also be advantageous to have available similar curing techniques for use with other elastomers as well. As is the case with ethylene acrylate copolymers, typical curing processes for fluoroelastomers are based on high temperature compression molding or transfer molding techniques. Products made using such processes include seals, gaskets, tubing, and other general rubber goods. In addition, textile composites coated with fluoroelastomers arc available commercially and are generally subjected to a baking process during fabrication, for example as disclosed in U.S. Patent 4,770,927 to Effenberger et al.

Low temperature radiation curing processes for fluoroelastomers are known in the prior art. For example, a stain-resistant protective fluoroelastomer coating composition for flooring that is curable using UV radiation is disclosed in European Patent Application 570254. UV cure of epoxy-containing fluorinated copolymers is described in Japanese Kokai Patent Application 5-302058. In addition, UV or electron beam cures of certain fluoroelastomer compositions that are normally cured with a polyol or polyamine crosslinking agent are disclosed in German Patent 19642029 and in Japanese Kokai Patent Application 61-031411. Blends of fluoroplastics and ethylene vinyl acetate copolymers or ethylene acrylic acid ester copolymers that are cured with UV radiation are disclosed in Japanese Kokai Patent Application 5-078539.

These prior art compositions possess interesting properties, but they do not provide compositions that exhibit the tensile strength, modulus, and compression set that is required in many commercial applications, for example air intake manifold gaskets. There thus remains a need in the art for fluoroelastomer compositions that can be cured at low temperature by low energy radiation processes and that, when cured, exhibit excellent tensile strength, modulus, and compression set.

Similarly, chlorinated elastomers such as chlorinated polyethylene, chlorosulfonated polyethylene and epichlorohydrin rubber, are traditionally crosslinked thermally by either ionic or free radical cure systems in compression molds. Extended high temperature exposure of curable compositions containing these polymers can be problematic due to the tendency of these polymers to dehydrochlorinate. Because of the high cure temperatures required, these elastomers have little utility in applications involving formation of elastomer/thermoplastic composites that are cured in place. Just as with ethylene alkyl acrylate elastomers, manufacture of chlorinated elastomer/thennoplastic composite articles requires an elastomer that can be cured at a temperature sufficiently low to preclude deformation of the thermoplastic. Low temperature UV cures of chlorinated polyolefin coating compositions are known. U.S. 4,880,849 discloses a UV-curable chlorinated polyolefin coating having excellent adhesion to plastic substrates. Japanese Kokai Patent Application 63-26751517 discloses UV cure of chlorosulfonated polyethylene rubber and epichlorohydrin hose that is first passed through a UV irradiation apparatus and then vulcanized at elevated temperature for 30-60 minutes. However, chlorinated elastomer compositions that could be readily applied to a groove or an article in their uncured state and that are adapted to low temperature curing techniques are not known in the prior art.

There is thus a need for a method by which an elastomeric sealing composition may be applied to a substrate in an efficient, adhesive-free manner and cured at low temperature to produce a cured seal that has an excellent balance of tensile strength, modulus and compression set.

### SUMMARY OF THE INVENTION

The present invention is directed to a process for applying a seal to an article comprising the steps of
i) blending at a temperature of between 25°C to 250°C
   A) 80 to 97 weight percent of a chlorinated elastomer selected from the group consisting of chlorinated polyolefin elastomers and epichlorohydrin elastomers;
   B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and;
   C) 0.2 to 5.0 weight percent of a UV initiator
   wherein the weight percentages of each of components A), B) and C) are based on the combined weight of components A), B) and C) to form a thermally stable, curable, extrudable mixture having a Mooney viscosity of 1-150, ML 1+4(100°C);
ii) depositing said extrudable mixture on said article in the shape and thickness desired to form an uncured seal; and
iii) irradiating said uncured seal with UV radiation for a time sufficient to cure said seal.

The invention is further directed to a process for applying a seal to an article comprising the steps of:
i) heating a thermally stable, curable, extrudable elastomer composition to a temperature of from 25°C to 250°C and depositing the elastomer composition onto said article in the shape and thickness desired to form an uncured seal composition, wherein the thermally stable, curable, extrudable elastomer composition has a Mooney viscosity of 1-150, ML 1+4 (100°C), and consists essentially of:
   A) 80 to 97 weight percent of a chlorinated elastomer selected from the group consisting of chlorinated polyolefin elastomers and epichlorohydrin elastomers;
   B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
   C) 0.2 to 5.0 weight percent of a UV initiator
   wherein the weight percentages of each of components A), B) and C) are based on the combined weight of components A), B) and C); and
ii) irradiating said uncured seal composition with UV radiation for a time sufficient to cure said uncured seal composition.

The present invention is also directed to a process for the manufacture of a gasket in situ comprising the steps of
i) heating a thermally stable, curable, extrudable elastomer composition to a temperature of from 25°C to 250°C and depositing the elastomer composition onto an article to form the uncured gasket composition, wherein the thermally stable, curable, extrudable elastomer composition has a Mooney viscosity of 1-150, ML 1+4 (100°C), and consists essentially of:
   A) 80 to 97 weight percent of a chlorinated elastomer selected from the group consisting of chlorinated polyolefin elastomers and epichlorohydrin elastomers;
   B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
   C) 0.2 to 5.0 weight percent of a UV initiator
   wherein the weight percentages of each of components A), B) and C) are based on the combined weight of components A), B) and C); and
ii) irradiating said uncured gasket composition with UV radiation for a time sufficient to cure said uncured gasket composition.

### DETAILED DESCRIPTION OF THE INVENTION

The thermally stable, curable compositions comprise an elastomer; a multifunctional crosslinking agent, generally an acrylic or methacrylic crosslinking agent; and a UV initiator. These curable compositions are utilized as starting materials in the process for applying a seal to an article. In preferred embodiments of the process of the invention, the elastomer, multifunctional crosslinking agent and UV initiator are present as three separate components. However, the UV initiator may be present as a chemically combined component with the elastomer. That is, the UV initiator may be chemically incorporated into the elastomeric component as a polymer-bound photoinitiator. Such polymer-bound photoinitiators are disclosed, for example in U.S. Patent 5,128,386 wherein a photoinitiator is described that is copolymerized with an acrylate copolymer.

The compositions are curable by the action of UV radiation. They are thermally stable at temperatures used to process uncured elastomer formulations, e.g. in mixing or extruding operations. Such temperatures generally range from 25°C to 250°C. By thermally stable is meant that the compositions do not spontaneously form a crosslinked network, i.e. they do not prematurely cure or scorch. That is, the viscosity of the compositions remains constant, within ± 50% of the initial value when heated to the processing temperature, as indicated by lack of a substantial increase in torque (i.e. an increase of less than 1 dNm) when subjected to the processing temperature for 30 minutes in a Moving Die Rheometer. The appropriate processing temperature will depend on the decomposition temperature of the particular UV initiator and multifunctional crosslinking agent that is employed. However, the processing temperature must be sufficiently high so that the curable elastomer composition flows to the degree required for the production process. This temperature will generally be from 25°C to 250°C, preferably from 90°C to 170°C. The compositions, when heated or subjected to mechanical working, such as in a screw extruder, gear pump, or piston pump, are capable of viscoelastic flow and may be metered and formed into shaped articles, such as seals. These articles may then be cured by exposure to UV radiation.

The elastomeric component of the thermally stable compositions may be any of the members of the following classes of raw (i.e. uncured) elastomeric polymers: chlorinated olefin elastomers, chlorosulfonated olefin elastomers, and epichlorohydrin elastomers.

Chlorinated olefin polymers are suitable for use as the elastomeric component. The chlorinated olefin polymers also specifically include chlorosulfonated olefin polymers. By olefin polymers is meant homopolymers and copolymers of C₂-C₈ alpha-monoolefins, including graft copolymers. The copolymers may be dipolymers or higher order copolymers, such as terpolymers or tetrapolymers. The olefin polymers may be branched or unbranched and may be prepared by free radical processes, Ziegler-Natta catalysis or catalysis with metallocene catalyst systems, for example those disclosed in U.S. Patents 5.272,236 and 5,278,272. Particularly useful examples of olefin polymers include homopolymers of C₂-C₃ alpha monoolefins, copolymers of ethylene and carbon monoxide, and copolymers of ethylene and at least one ethylenically unsaturated monomer selected from the group consisting of C₃-C₂₀ alpha monoolefins, C₁-C₁₂ alkyl esters of unsaturated C₃-C₂₀ monocarboxylic acids, unsaturated C₃-C₂₀ mono- or dicarboxylic acids, anhydrides of unsaturated C₄-C₈ dicarboxylic acids, and vinyl esters of saturated C₂-C₁₈ carboxylic acids. Specific examples of these polymers include polyethylene, polypropylene, ethylene vinyl acetate copolymers, ethylene acrylic acid copolymers, ethylene methacrylic acid copolymers, ethylene methyl acrylate copolymers, ethylene methyl methacrylate copolymers, ethylene n-butyl methacrylate copolymers, ethylene glycidyl methacrylate copolymers, graft copolymers of ethylene and maleic anhydride, graft copolymers of propylene and maleic anhydride, and copolymers of ethylene with propylene, butene, 3-methyl-1-pentene, hexene, or octene. Preferred olefin polymers are polyethylene, ethylene propylene copolymers, ethylene butene copolymers, ethylene octene copolymers, copolymers of ethylene and acrylic acid, copolymers of ethylene and methacrylic acid, and copolymers of ethylene and vinyl acetate. The olefin polymers have number average molecular weights within the range of 1,000 to 300,000, preferably from 50,000 to 300,000. The chlorinated and chlorosulfonated olefin polymers have chlorine contents of from about 15 weight percent to about 70 weight percent. The chlorosulfonated olefin polymers have sulfur contents of 0.5-10 weight percent, preferably 1-3 weight percent.

The chlorinated or chlorosulfonated olefin polymers may be prepared from the olefin polymers by free radical initiated chlorination and chlorosulfonation. Chlorination of the olefin polymers may take place at temperatures of 50°C-150°C and at pressures of 1-10 atmospheres using gaseous chlorine as the chlorinating agent. In solution chlorination, the reaction medium is an inert solvent, for example carbon tetrachloride, chlorinated benzene, chloroform or fluorobenzene. Alternatively, slurry chlorination in aqueous or organic suspension can be used. Fluidized bed processes are also known, as well as melt processes. Chlorosulfonation of the olefin polymer starting materials may take place in solution, under similar conditions, utilizing gaseous chlorine and sulfur dioxide, sulfuryl chloride, or a combination of chlorine, sulfur dioxide and sulfuryl chloride. Commercially available chlorinated and chlorosulfonated olefin polymers include Tyrin^{®}chlorinated polyethylene, Hypalon^{®}chlorosulfonated polyethylene, and Acsium^{®}chlorosulfonated polyethylene, all available from DuPont Dow Elastomers L.L.C.

Epichlorohydrin elastomers that are suitable for use as the elastomeric component include both polyepichlorohydrin homopolymers and copolymers comprising copolymerized units of epichlorohydrin and ethylene oxide. Terpolymers containing cure site monomers, such as allyl glycidyl ether, may also be used. Such compositions generally contain about 20-45 wt.% chlorine. Commercially available examples include Epichlomer^{®}rubber manufactured by Daiso Epichlo Rubber Co., Ltd., Japan and Hydrin^{®}epichlorohydrin rubber manufactured by Nippon Zeon Co., Ltd., Japan.

The elastomeric component may be a blend of elastomers as well as a single elastomer. The-blends may be mixtures of polymers of the same class, or they may be mixtures of more than one type of elastomer. Blends wherein only one elastomer is capable of cure by exposure to UV radiation are also contemplated by the invention. Blend compositions would be particularly useful for balancing physical properties. For example, it would be desirable to balance state of cure with fuel resistance by blending fluoroelastomers with epichlorohydrin rubbers. In other circumstances, blends of costly polymers with less expensive polymers often yield a combination of properties that are adequate for less demanding applications. The Mooney viscosities of the blends will preferably be within the range of 1-150 because within this range the blends will be suitable for use in the process of the present invention for producing general rubber articles, such as seals.

In addition to an elastomeric component, the curable compositions also include at least one multifunctional crosslinking agent. Preferably the multifunctional crosslinking agent will be an acrylic or methacrylic crosslinking agent. In addition, it may be a multifunctional cyanurate or multifunctional isocyanurate, such as triallyl isocyanurate or triallyl cyanurate. By multifunctional acrylic or methacrylic crosslinking agent is meant an ester that is a reaction product of a polyhydroxylic compound, generally a polyhydroxylic alcohol, and acrylic acid or methacrylic acid, wherein the crosslinking agent has at least two carbon-carbon double bonds. Such compositions are commonly referred to in the art as multifunctional acrylates or multifunctional methacrylates. Typical multifunctional acrylates and methacrylates have molecular weights of 150 to 1,000 and contain at least two polymerizable unsaturated groups per molecule.

Representative multifunctional acrylic crosslinking agents include acrylates and methacrylates such as ethylene glycol diacrylate; ethylene glycol dimethacrylate; 1,6-hexanediol diacrylate; 1,6-hexanediol dimethacrylate; 1,4-butanediol diacrylate; pentaerythritol triacrylate; pentaerythritol tetraacrylate; dipentaerythritol pentaacrylate, methoxy-1,6-hexanediolpentaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butylencoxide glycol diacrylates; and bisphenol A alkylene oxide adduct diacrylates. Trimethylolpropane triacrylate and trimethylolpropane trimethacrylate are preferred crosslinking agents because these compounds arc readily available. In addition, compression set and crosslink density arc enhanced in compositions containing these crosslinking agents compared to compositions containing difunctional acrylates, such as diethylene glycol dimethacrylate.

The multifunctional acrylic and methacrylic crosslinking agents are capable of homopolymerization when irradiated. Thus, when the curable compositions of the invention that contain multifunctional acrylates or methacrylates arc exposed to UV radiation, two reactions occur simultaneously. The multifunctional crosslinking agent reacts with the elastomeric polymer component to form interchain and intrachain crosslinks, resulting in a rubber matrix. In addition, excess multifunctional crosslinking agent will homopolymerize and form an interpenetrating network which acts to reinforce the rubber matrix, much in the same manner as fillers reinforce elastomers. It is therefore possible to control the hardness of the final cured product by adjusting the proportion of multifunctional crosslinker present in the curable composition. In general, difunctional acrylates and methacrylates are less efficient crosslinking agents compared to their analogues having higher functionalities. Consequently, crosslinking agents of the class having higher functionalities are preferred.

Elastomeric materials compounded and cured according to methods commonly used in rubber processing technology generally contain carbon black or mineral fillers as reinforcing agents. Reinforcement is reflected in properties such as hardness, modulus, and tensile strength. Generally, reinforced elastomers are characterized by non-linear stress/strain dependence. In contrast, non-reinforced elastomer compositions are characterized by an initial stress build-up at low deformation which does not substantially increase at higher deformation. Further, non-reinforced elastomer compositions tend to break at relatively low ultimate tensile strength.

Use of fillers in UV-initiated reactions would normally be expected to interfere with the UV curing process. However, the present process permits curing of translucent compositions. Thus, the compositions may contain a limited amount of fillers, generally no more than 15 parts by weight per 100 parts polymer. Reinforcement is effected simultaneously with crosslinking by formation of an interpenetrating network. The resultant product exhibits stress/strain behavior that is more linear than that of traditional elastomers which contain fillers which are not chemically bound to the elastomer matrix.

The amount of multifunctional crosslinking agent present in the compositions will depend on the particular elastomer used. Generally, the amount ranges from 0.5 to 25 weight percent, based on the combined weight of polymer, multifunctional crosslinking agent, and UV initiator.

The third component of the curable compositions is a UV initiator. It may be selected from those organic chemical compounds conventionally employed to promote UV-initiated formation of radicals either by intramolecular homolytic bond cleavage or by intermolecular hydrogen abstraction. Such agents include organic compounds having aryl carbonyl or tertiary amino groups. Among the compounds suitable for use are benzophenone; acetophenone; benzil; benzaldehyde; o-chlorobenzaldehyde, xanthone; thioxanthone; 9,10-anthraquinone; 1-hydroxycyclohexyl phenyl ketone; 2,2-diethoxyacetophenone; dimethoxyphenylacetophenone; methyl diethanolamine; dimethylaminobenzoate; 2-hydroxy-2-methyl-1-phenylpropane-1-one; 2.2-di-secbutoxyacetophenone; 2,2-dimethoxy-1,2-diphcnylethan-1-one; benzil dimethoxyketal; benzoin methyl ether, and phenyl glyoxal. Upon exposure to UV radiation, a variety of photochemical transformations may occur, for example, the UV initiator may form free radical reactive fragments that react with the acrylate end groups of the multifunctional acrylic or methacrylic crosslinking agent. This initiates crosslinking of the polymer as well as homopolymerization of the acrylic or methacrylic crosslinking agent. A preferred UV initiator is 1-hydroxycyclohexyl phenyl ketone because of the rapidity with which it generates free radicals when exposed to UV radiation. Mixtures of UV initiators may also be used. This is often desirable because it provides more efficient production of radicals in certain cases. In general, the UV initiator will be present in an amount of 0.1 to 10.0 weight percent, based on the total weight of polymer, multifunctional crosslinking agent, and UV initiator. However, it is preferable to use between 0.5-2.5 weight percent UV initiator, most preferably 0.5-1.0 weight percent UV initiator, based on total weight of polymer, crosslinking agent and UV initiator, because high levels of photoinitiator tend to interfere with penetration and do not substantially contribute to the overall crosslink density. Within the ranges disclosed herein, there is an optimum level of photoinitiator for each particular combination of uncured gum elastomer and crosslinking agent. These optimum levels can be readily determined by one skilled in the art. For example, hydrogenated nitrile rubber will generally require a higher level of photoinitiator than a copolymer of ethylene, methyl acrylate, and ethyl hydrogen maleate. Higher levels of photoinitiator increase the crosslink density at the surface of the cured composition. Low levels of photoinitiators can result in better (i.e. lower) compression sets of samples that are several millimeters thick.

In addition, for purposes of the present invention, the processing temperature must not exceed the temperature at which thermal degradation of the UV initiator occurs. In some cases such degradation would result in scorchy compositions due to formation of free radicals. This is so because thermally-induced fragmentation of the initiator within the processing equipment results in premature crosslinking of the elastomer. In other instances, slow curing compositions would result due to inactivation of the initiator. Degradation temperatures will differ for each particular UV initiator. Depending upon the type of rubber and the amount of additives, the processing temperature will range from between 25° and 250°C. It is an object of the invention to provide stable elastomeric compositions which can be applied to a substrate at temperatures of up to 250°C. A further practical limitation on the processing temperature is that the temperature must not exceed the softening point of the substrate to which it is applied.

The elastomeric component, multifunctional crosslinking agent component, and UV initiator component are present in the compositions in specific relative ratios.

When chlorinated olefin polymers, chlorosulfonated olefin polymers or epichlorohydrin rubbers are used as the elastomeric component of the composition, the elastomer is present in an amount of 80-97 weight percent, based on the total weight of elastomer, crosslinking agent, and UV initiator. The multifunctional crosslinking agent is present in an amount of 2-19.5 weight percent, based on the total weight of elastomer, crosslinking agent, and UV initiator. The UV initiator is present in an amount of 0.2-5.0 weight percent based on the total weight of elastomer, crosslinking agent, and UV initiator. Preferably, the elastomeric component will be present in an amount of from 85-95 weight percent, based on the total weight of elastomer, crosslinking agent, and UV initiator. Preferably, the crosslinker will be present in an amount of 3-15 weight percent, based on the total weight of elastomer, crosslinking agent and UV initiator. If less than 3 weight percent crosslinker is present, a cured composition having relatively high compression set generally results. Greater than 15 weight percent crosslinker results in a high level of hompolymerized acrylic or methacrylic crosslinker producing a highly crosslinked elastomeric matrix of high hardness, low compressability and low elongation at break. The particular component range selected will thus depend on the specific end use contemplated.

Various additives, commonly used in rubber compounding, may be incorporated into the compositions to modify, stabilize, and reinforce them. Preferably, such additives will be used in amounts which do not interfere substantially with the crosslinking reaction of the uncured polymeric component. For example, if large amounts of fillers that are opaque to UV light are utilized, the filled compositions will not cure evenly throughout, or only the surface of the composition will be cured. Usually, fillers may be employed in amounts of up to about 15 parts per hundred parts of elastomer. Typical examples include non-black fillers such as minerals or glass fibers. Polymeric fillers of high reinforcing efficiency, such as polytetrafluoroethylene and aramid fibers, may also be used, generally at low levels. It is preferable that the presence of additives does not raise the viscosity of the curable composition used in the process of the invention to more than ML 1+4 (100°C) of 150 or lower it to less than ML 1+4 (100°C) of 1. Compositions outside this range are not suitable for the gasketing in place process of the invention.

Small amounts of inhibitors may also be present in the compositions as a result of the presence of these additives in commercial samples of acrylic or methacrylic crosslinking agents. The inhibitors are generally present in low amounts, for example below 1500 ppm (parts per million, based on the weight of the crosslinking agent). They act to prevent thermally induced polymerization of the crosslinking agents during storage and shipment.

The compositions are particularly suited for manufacture of elastomeric seals and gaskets in situ using a technique we refer to herein as gasketing, in place. According to this technique, a curable elastomeric composition is heated to a temperature of 25°-250°C, preferably 90°C-170°C. The heated composition is then metered onto a substrate to form an uncured seal of a desired thickness which is then cured. Thus, the seal is formed in place directly on the object to be scaled, rather than in a separate molding step. Typically, uncured seals are formed in thicknesses of 1-15 mm, preferably in thicknesses of 2-8 mm.

Robotized hot melt equipment may be used to apply gaskets in place. In one embodiment of the process of the present invention, a curable composition comprising a low viscosity elastomer component, multifunctional crosslinking agent, and UV initiator, is introduced to a drum having a heated platen and piston. The composition, when heated, becomes soft and extrudable. It is forced out of the drum by the action of the piston, generally at relatively low pressures, typically less than 5.0 bars (i.e. 0.5 MPa). The composition is then fed by gear or piston pumping through heated tubing to an application gun fitted to a multidimensional industrial robot capable of precise and rapid metering. In this way, the composition can be introduced into a groove of a part such as a thermoplastic article that has just been produced, for example by molding. The bead of uncured elastomer in the groove solidifies rapidly as it cools and forms an uncured sealing element. The groove can be in a part made from other materials as well, including but not limited to metaL Alternatively, the composition can be deposited onto the exterior of an object to form a seal. This hot melt application method is preferred for low viscosity elastomers, generally of Mooney viscosity 1-20 ML 1+4 (100°C). The method permits extrusion from a drum using relatively low pressures. Continuous feeding and metering pumps are capable of handling compositions of the invention having viscosities up to 1000 Pa.s. Hot melt equipment may be used for compositions having somewhat higher viscosities, for example ML 1+4 (100°C) of 70, by employing an extruder to introduce the composition into the heated tubing. The viscosity thereupon decreases, permitting formation of seals from the higher viscosity compositions.

In another embodiment of the process of the invention, relatively high viscosity compositions or compositions of relatively low heat resistance may be formed into uncured seals by the gasketing in place technique. Instead of using hot melt equipment, screw extruders are exclusively utilized to deliver the elastomeric composition to the article to be sealed. This technique is particularly useful when chlorinated elastomers of Mooney viscosity 10-90 [ML 1+ 10 (121°C)] are employed as the elastomeric component. An extruder that is used in combination with a flexible arm to apply a bead of uncured elastomer to a groove is particularly preferred for such gasketing in place processes. This differs from conventional extruder technology in that the extruder is not utilized to form the finished part. Instead, it pumps the uncured elastomer composition to a robotized application head that meters the composition and deposits it at the location to be sealed Use of screw extruders results in relatively high energy input to the polymer compared with processes that utilize hot melt equipment. In order to minimize elastomer degradation in the extruder, the extrusion process must not cause the temperature of the compound to rise above 250°C. This generally requires slow extrusion speeds. Consequently, extrusion processes are generally slower methods of manufacture. Further, such equipment requires high investment costs. Those skilled in the art will recognize that the appropriate temperature for extrusion will be dependent on the viscosity of the uncured elastomer, the molecular weight of the uncured elastomer, the level of crosslinking agent, the decomposition temperature of the photoinitiator and the volatilization temperature of the crosslinking agent and will select a value within the range of 25°-250°C that is optimum for the particular circumstances.

The gasketing process of the present invention may be employed for manufacture of seals and gaskets using the above compositions or other curable elastomer compositions. Generally, the elastomer component will be present in an amount of from 70-99 parts by weight, the multifunctional crosslinker will be present in an amount of 0.5-29 parts by weight, and the UV initiator will be present in an amount of 0.1-10 parts by weight, all based on the combined weight of elastomer, crosslinker, and UV initiator.

In order to optimize the elastomeric properties of seals made by the above-described processes, they must be crosslinked, i.e. cured. It would be impractical to utilize a heat-activated cure system to accomplish a rapid crosslinking reaction in such processes. One would risk converting the curable composition used to form the seals to an intractable, crosslinked material during the metering step. Specifically, as the curable composition was heated or subjected to temperature elevation caused by mechanical working, the crosslinking reaction would be triggered. It would be difficult to control premature gelling (i.e. scorch) during metering. Because crosslinked compositions do not flow readily, processes which result in scorchy products are undesirable. Consequently, heterolytic cure systems, which rely on thennally-induced crosslinking reactions, are not appropriate for the present process. In addition, the most common homolytic, i.e. free radical, curing processes, which depend on thermal decomposition of peroxides, are also unsuitable for use in the present process. It has, however, been found that curable compositions using the process of the invention can be effectively cured by UV induced free radical processes.

UV cure of elastomeric compositions using the process of the invention may be accomplished at room temperature or at higher temperatures. For example, in certain circumstances wherein the elastomeric composition is to be used as a sealant, it may be desirable to perform a photocure immediately after application of the uncured composition to the object to be scaled. At that point, the temperature of the composition may be as high as 250°C. However, heating the curable composition is neither necessary nor particularly desirable for an effective photocure. In addition, when the compositions are used to form seals by the gasketing in place technique on thermoplastic articles, low temperature cure minimizes any possibility of degradation or thermal distortion of the thermoplastic. Further, it is not necessary to perform the UV irradiation in an inert atmosphere. The cure reaction can be conducted under atmospheric conditions with no deleterious effects. In addition, it has also been found that in some cases, particularly when curing chlorinated or chlorosulfonated polyolefins, curing the composition under water is preferable to minimize heat buildup. This minimizes the tendency of these polymers to dehydrochlorinate, a process that causes polymer degradation and discoloration and which inhibits UV cure.

For purposes of the process of this invention, the wavelength spectrum of radiation used to effect the curing reaction typically corresponds to the absorption maximum of the UV initiator. This typically ranges from about 200-400 nanometers. Suitable UV radiation sources include medium pressure mercury vapor lamps, electrodeless lamps, pulsed xenon lamps, and hybrid xenon/mercury vapor lamps. A preferred arrangement comprises one or more lamps together with a reflector, which diffuses the radiation evenly over the surface to be irradiated. The radiation dosage must be sufficient to cure the polymeric composition, i.e. to produce a cured composition having a compression set of 90 or lower, preferably 50 or lower, and an elongation at break of at least 100%. A dosage of at least about 10 joules per square centimeter, and preferably 20 joules is usually sufficient for optimum cure. Dosage is a function of the time of exposure to the UV radiation, the distance from the UV radiation source and the power level of the radiation source. The required radiation dose can be readily determined by curing small samples of the curable composition and measuring physical properties, such as tensile strength, compression set and elongation, after cure. In most instances, an acceptable degree of cure can be obtained by exposures of 30-300 seconds using a lamp of about 80 W/cm. Appropriate adjustments may be made depending on the power of the lamp, distribution of the output over the UV range, the thickness of the sample as well as the polymeric component, level of crosslinking agent present, and level of filler present.

Foaming agents may be incorporated into the curable compositions In such circumstances a cellular structure will be formed by exposure of the curable composition to UV radiation as a result of thermal decomposition of the foaming agent induced by simultaneous heating that occurs during exposure to UV light. This heating phenomenon may be augmented and controlled by additional external application of heat. Typical foaming agents that may be employed include p,p'-oxybisbenzenesulfonyl hydrazide, azodicarbon-amides, p-toluenesulfonyl semicarbazides, and dinitrosopentamethylene tetramine. Alternatively, the UV curing reaction may also be accomplished with cooling, so that curing and foaming occur sequentially, rather than simultaneously. That is, the curable composition is exposed to UV radiation with cooling, and the cured composition is then passed through a hot air tunnel to cause foaming. Closed cell structures of low specific gravity may be prepared by such processes. For example, structures with specific gravities of 0.25-6.0 g/cm³ may be obtained.

Low viscosity compositions may be utilized as coating compositions for solvent-free systems or systems having low levels, i.e. up to about 2 wt.% of solvent, based on the total weight of elastomer, multifunctional crosslinker and UV initiator. It is thus not necessary to cast films from polymer solutions. Instead, the low viscosity curable composition flows onto the substrate by application of heat. The optimum ratio of elastomer, multifunctional crosslinking agent and UV initiator for coating compositions will be different from that of compositions useful in the manufacture of seals and gaskets. For example, a relatively thin coating will cure more quickly and permit use of relatively high levels of UV initiator because opacity will not be a problem. In addition, higher levels of multifunctional crosslinking agents may be employed to reduce viscosity and permit easier processing because coating compositions can tolerate higher hardness than gasketing materials. Further, coating compositions do not require the compression set resistance that is necessary for seals and gaskets.

The curable elastomeric compositions are useful in manufacture of general rubber goods, coating compositions, foams and wire coating. They are most advantageously used however, in preparation of seals and gaskets for thermoplastic articles, particularly those employed in automotive applications.

The invention is illustrated by the following specific embodiments wherein all parts are by weight unless otherwise indicated.

### Example 1

A curable elastomeric composition, Sample 1, was prepared by mixing the following components on a rubber mill: 90 parts of a chlorosulfonated polyethylene elastomer [chlorine content 29 wt.%, sulfur content of 1.4 wt. % and a Mooney viscosity, ML 1+4 (100°C) of 221, 10.0 parts trimethylolpropane triacrylate, and 0.5 parts Irgacure^{®}184 photoinitiator (1-hydroxycyctohexyt phenyl ketone, available from Ciba Geigy, Inc.). The milled composition was shaped into uncured slabs of 2 mm thickness for tensile testing specimens and 6 mm thickness for cutting compression set disks. The slabs were shaped by molding in a mold coated with Teflon^{®}fluoropolymer resin. The uncured slabs were exposed to UV radiation from a medium pressure mercury lamp which emitted radiation of wavelength approximately 250-400 nm at 80 watts/cm. The 2 mm slabs were exposed for 4 minutes and the 6 mm slabs were exposed for 6 minutes. Exposure was effected under water to limit the heat build-up in the elastomeric composition which could cause excessive dehydrochlorination and polymer degradation. The distance of the samples from the lamp was 10 cm. The cured samples exhibited the properties shown in Table I.

**TABLE I**

| Sample Composition | 1 |
|---|---|
| Polymer | 90 |
| Trimethylolpropane triacrylate | 10 |
| Irgacure^{®}184 Photoinitiator | 0.5 |
| Physical Properties | |
| Hardness,¹ Shore A (pts) Surface Exposed to Radiation | 63 |
| Hardness,¹ Shore A (pts) Surface Away From Source | 61 |
| T_{B} (MPa) | 4.7 |
| M₁₀₀ (MPa) | 3.6 |
| E_{B} (%) | 128 |
| Compression Set (%) 70 hours, 125°C. 25% deflection, 4 minute UV exposure | 57 |

| | |
|---|---|
| ¹6 mm slabs in water | |

### Example 2

A curable elastomeric composition, Sample 2, was prepared by mixing the following components on a rubber mill: 85 parts of a chlorinated polyethylene elastomer [chlorine content 36 wt.% and a Mooney viscosity, ML 1+4 (121°C) of 36], 15 parts trimethylolpropane triacrylate, I part Irgacure 1800^{®} photoinitiator and 0.5 parts Naugard^{®} 445 antioxidant (4,4'-bis-(α, α-dimethylbenzyl)diphenylamine). The milled composition was shaped into uncured slabs of 2 mm thickness for preparation of tensile specimens and 6 mm thickness for cutting compression set disks. The slabs were shaped by molding in a mold coated with Teflon^{®}fluoropolymer resin. An uncured slab was exposed for 4 minutes, under water, to limit the heat build-up in the elastomeric compositions, to UV radiation from a medium pressure mercury lamp which emitted radiation of wavelength approximately 250-400 nm at 80 watts/cm. The distance of the samples from the lamp was 10 cm. The cured samples exhibited the properties shown in Table II.

**TABLE II**

| Sample Composition | 2 |
|---|---|
| Polymer | 85 |
| Trimethylolpropane triacrylate | 15 |
| Irgacure^{®} 1800 Photoinitiator | 1.0 |
| Naugard^{®} 445 Antioxidant | 0.5 |
| Physical Properties | |
| Hardness,¹ Shore A (pts) Surface Exposed to Radiation | 94 |
| Hardness,¹ Shore A (pts) Surface Away From Source | 91 |
| T_{B} (MPa) | 10.9 |
| E_{B} (%) | 93 |
| Compression Set (%) 70 hours, 125°C. 25% deflection. 4 minute UV exposure, 6 mm slab | 58 |

| | |
|---|---|
| ¹6 mm slabs in water | |

### Example 3

A curable elastomeric composition, Sample 3, was prepared by mixing the following components on a rubber mill: 90 parts of Hydrin^{®}C 2000L epichlorohydrin elastomer (an epichlorohydrintethylene oxide copolymer, chlorine content 26 wt.%, Mooney viscosity 65, available from Nippon Zeon, Inc.), 10.0 parts trimethylolpropane triacrylate, and 0.75 parts Irgacure 184^{®} photoinitiator (1-hydroxycyclohexyl phenyl ketone, available from Ciba Geigy, Inc.). The milled composition was shaped into uncured slabs of 2 mm thickness for preparation of tensile specimens and 6 mm thickness for cutting compression set disks. The slabs were shaped by molding in a mold coated with Teflon^{®} fluoropolymer resin. An uncured slab was exposed for 4 minutes in water to UV radiation from a medium pressure mercury lamp which emitted radiation of wavelength approximately 250-400 nm at 80 watts/cm. The distance of the samples from the lamp was 10 cm. The cured samples exhibited the properties shown in Table III.

**TABLE III**

| Sample Composition | 3 |
|---|---|
| Polymer | 90 |
| Trimethylolpropane triacrylate | 10 |
| Irgacure^{®}184 Photoinitiator | 0.75 |
| Physical Properties | |
| Hardness¹, Shore A (pts) Surface Exposed to Radiation | 54 |
| Hardness¹, Shore A (pts) Surface Away From Source | 50 |
| T_{B} (MPa) | 4.6 |
| M₁₀₀ (MPa) | 3.3 |
| E_{B} (%) | 187 |
| Compression Set (%) 70 hours, 120°C, 25% deflection, 4 minute UV exposure | 24 |

| | |
|---|---|
| ¹6 mm stabs in water | |

## Claims

1. A process for applying a seal to an article comprising the steps of
i) blending at a temperature of between 25°C to 250°C
A) 80 to 97 weight percent of a chlorinated elastomer selected from the group consisting of chlorinated polyolefin elastomers and epichlorohydrin elastomers;
B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and;
C) 0.2 to 5.0 weight percent of a UV initiator
wherein the weight percentages of each of components A), B) and C) are based on the combined weight of components A), B) and C) to form a thermally stable, curable, extrudable mixture having a Mooney viscosity of 1-150, ML 1+4 (100°C);
ii) depositing said extrudable mixture on said article in the shape and thickness desired to form an uncured seal; and
iii) irradiating said uncured seal with UV radiation for a time sufficient to cure said seal.

2. A process for applying a seal to an article comprising the steps of:
i) heating a thermally stable, curable, extrudable elastomer composition to a temperature of from 25°C to 250°C and depositing the elastomer composition onto said article in the shape and thickness desired to form an uncured seal composition, wherein the thermally stable, curable, extrudable elastomer composition has a Mooney viscosity of 1-150, ML 1+4 (100°C), and consists essentially of:
A) 80 to 97 weight percent of a chlorinated elastomer selected from the group consisting of chlorinated polyolefin elastomers and epichlorohydrin elastomers;
B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
C) 0.2 to 5.0 weight percent of a UV initiator
wherein the weight percentages of each of components A), B) and C) are based on the combined weight of components A), B) and C); and
ii) irradiating said uncured seal composition with UV radiation for a time sufficient to cure said uncured seal composition.

3. A process for the manufacture of a gasket in situ comprising the steps of
i) heating a thermally stable, curable, extrudable elastomer composition to a temperature of from 25°C to 250°C and depositing the elastomer composition onto an article to form the uncured gasket composition, wherein the thermally stable, curable, extrudable elastomer composition has a Mooney viscosity of 1-150, ML 1+4 (100°C), and consists essentially of:
A) 80 to 97 weight percent of a chlorinated elastomer selected from the group consisting of chlorinated polyolefin elastomers and epichlorohydrin elastomers;
B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
C) 0.2 to 5.0 weight percent of a UV initiator
wherein the weight percentages of each of components A), B) and C) are based on the combined weight of components A), B) and C); and
ii) irradiating said uncured gasket composition with UV radiation for a time sufficient to cure said uncured gasket composition.

4. The process of any preceding claim wherein the chlorinated elastomer is a chlorinated polyolefin elastomer.

5. The process of claim 1, 2 or 3 wherein the chlorinated elastomer is a chlorosulfonated polyolefin elastomer.

6. The process of claim 1, 2 or 3 wherein the chlorinated elastomer is an epichlorohydrin elastomer.

7. The process of claim 1, 2 or 3 wherein the curable composition is heated to a temperature of 90°C to 170°C in step i).

8. The process of claim 1, 2 or 3 wherein the article is made of a thermoplastic material.

9. The process of claim 1, 2 or 3 wherein the multifunctional crosslinking agent is a multifunctional acrylate.

10. The process of claim 1, 2 or 3 wherein the multifunctional crosslinking agent is a multifunctional methacrylate.

11. The process of claim 1, 2 or 3 wherein the chlorinated elastomer has a Mooney viscosity of 10-90, ML 1 +4 (121°C).

12. The process of claim 1, 2 or 3 wherein said article is made of a metal.

13. The process of claim 1, 2 or 3 wherein the multifunctional crosslinking agent is cyanurate.

14. The process of claim 1, 2 or 3 wherein the multifunctional crosslinking agent is an isocyanurate.

15. The process of claim 1, 2 or 3 wherein the composition of A) additionally comprises up to 2 weight percent solvent, based on the combined weight of the components A), B) and C) of the elastomer composition.

16. The process of claim 1, 2 or 3 wherein the extrudable elastomer composition is metered through an extruder prior to being deposited onto said article.

17. A cured article produced by the process of claim 1, 2 or 3.

18. A cured, shaped article produced from a thermally stable, curable elastomer composition, having a Mooney viscosity of 1-150, ML 1+4 (100°C), consisting essentially of
A) 80 to 97 weight percent of a chlorinated elastomer selected from the group consisting of chlorinated polyolefin elastomers and epichlorohydrin elastomers;
B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
C) 0.2 to 5.0 weight percent of a UV initiator
wherein the weight percentages of each of components A), B) and C) are based on the combined weight of components A), B) and C).

19. A cured shaped article according to claim 18 wherein the shaped article is an elastomeric seal or gasket.

20. A substrate having attached thereto a cured elastomeric seal or gasket, the elastomeric seal or gasket being produced from a thermally stable, curable elastomer composition, having a Mooney viscosity of 1-150, ML 1+4 (100°C), consisting essentially of
A) 80 to 97 weight percent of a chlorinated elastomer selected from the group consisting of chlorinated polyolefin elastomers and epichlorohydrin elastomers;
B) 2 to 19.5 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
C) 0.2 to 5.0 weight percent of a UV initiator
wherein the weight percentages of each of components A), B) and C) are based on the combined weight of components A), B) and C),
wherein the elastomeric seal or gasket applied from the melt and is formed in place directly on the substrate.

21. A substrate according to claim 20 wherein the substrate is a thermoplastic article.

22. A substrate according to claim 21 wherein the thermoplastic article is grooved and the elastomeric seal or gasket is applied into and formed in the groove.

23. A substrate according to any one of claims 20 to 22 wherein the substrate is an automotive component.

## Patentansprüche

1. Verfahren zum Anbringen einer Abdichtung an einen Gegenstand, umfassend die Schritte des
i) Mischens bei einer Temperatur zwischen 25 °C und 250 °C von
A) 80 bis 97 Gewichtsprozent eines chlorierten Elastomers ausgewählt aus der Gruppe bestehend aus chlorierten Polyolefinelastomeren und Epichlorhydrinelastomeren;
B) 2 bis 19,5 Gewichtsprozent eines multifunktionellen Vernetzungsmittels ausgewählt aus der Gruppe bestehend aus multifunktionellen Acrylvernetzungsmitteln, multifunktionellen Methacrylvernetzungsmitteln, multifunktionellen Cyanuratvernetzungsmitteln und multifunktionellen Isocyanuratvernetzungsmitteln; und
C) 0,2 bis 5,0 Gewichtsprozent eines UV-Initiators,
wobei die Gewichsprozentsätze jeder Komponente A), B) und C) auf das kombinierte Gewicht der Komponenten A), B) und C) bezogen sind, um eine wärmebeständige, aushärtbare, extrudierbare Mischung zu bilden, die eine Mooney-Viskosität von 1-150, ML 1 + 4 (100°C) aufweist;
(ii) Absetzens der extrudierbaren Mischung auf den Gegenstand in der zum Bilden einer nicht ausgehärteten Abdichtung erwünschten Gestalt und Dicke; und
(iii) Bestrahlens der nicht ausgehärteten Abdichtung mit UV-Strahlung für eine Zeitspanne, die ausreicht, um die Abdichtung auszuhärten.

2. Verfahren zum Anbringen einer Abdichtung an einen Gegenstand, umfassend die Schritte des
i) Erhitzens einer wärmebeständigen, aushärtbaren, extrudierbaren Elastomerzusammensetzung auf eine Temperatur von 25 bis 250 °C und Absetzens der Elastomerzusammensetzung auf den Gegenstand in der erwünschten Gestalt und Dicke, um eine nicht ausgehärtete Abdichtungszusammensetzung zu bilden, wobei die wärmebeständige, aushärtbare, extrudierbare Elastomerzusammensetzung eine Mooney-Viskosität von 1-150, ML 1 + 4 (100 °C) aufweist und im Wesentlichen aus Folgendem besteht:
A) 80 bis 97 Gewichtsprozent eines chlorierten Elastomers ausgewählt aus der Gruppe bestehend aus chlorierten Polyolefinelastomeren und Epichlorhydrinelastomeren;
B) 2 bis 19,5 Gewichtsprozent eines multifunktionellen Vernetzungsmittels ausgewählt aus der Gruppe bestehend aus multifunktionellen Acrylvernetzungsmitteln, multifunktionellen Methacrylvernetzungsmitteln, multifunktionellen Cyanuratvernetzungsmitteln und multifunktionellen Isocyanuratvernetzungsmitteln; und
C) 0,2 bis 5,0 Gewichtsprozent eines UV-Initiators,
wobei die Gewichsprozentsätze jeder Komponente A), B) und C) auf das kombinierte Gewicht der Komponenten A), B) und C) bezogen sind, und
(ii) Bestrahlen der nicht ausgehärteten Abdichtungszusammensetzung mit LJV-Strahlung für eine Zeitspanne, die ausreicht, um die nicht ausgehärtete Abdichtungszusammensetzung auszuhärten.

3. Verfahren zur Herstellung einer Dichtung in situ, umfassend die Schritte des
i) Erhitzens einer wärmebeständigen, aushärtbaren, extrudierbaren Elastomerzusammensetzung auf eine Temperatur von 25 bis 250 °C und Absetzen der Elastomerzusammensetzung auf einen Gegenstand, um eine nicht ausgehärtete Dichtungszusammensetzung zu bilden, wobei die wärmebeständige, aushärtbare, extrudierbare Elastomerzusammensetzung eine Mooney-Viskosität von 1 - 150, ML 1 + 4 (100°C) aufweist und im Wesentlichen aus:
A) 80 bis 97 Gewichtsprozent eines chlorierten Elastomers ausgewählt aus der Gruppe bestehend aus chlorierten Polyolefinelastomeren und Epichlorhydrinelastomeren;
B) 2 bis 19,5 Gewichtsprozent eines multifunktionellen Vernetzungsmittels ausgewählt aus der Gruppe bestehend aus multifunktionellen Acrylvernetzungsmitteln, multifunktionellen Methacrylvernetzungsmitteln, multifunktionellen Cyanuratvernetzungsmitteln und multifunktionellen Isocyanuratvernetzungsmitteln; und
C) 0,2 bis 5,0 Gewichtsprozent eines UV-Initiators,
wobei die Gewichsprozentsätze jeder Komponente A), B) und C) auf das kombinierte Gewicht der Komponenten A), B) und C) bezogen sind, und
(ii) Bestrahlen der nicht ausgehärteten Dichtungszusammensetzung mit UV-Strahlung für eine Zeitspanne, die ausreicht, um die nicht ausgehärtete Dichtungszusammensetzung auszuhärten.

4. Verfahren nach einem der vorhergehenden Ansprüche, wobei das chlorierte Elastomer ein chloriertes Polyolefinelastomer ist.

5. Verfahren nach Anspruch 1, 2 oder 3, wobei das chlorierte Elastomer ein chlorsulfoniertes Polyolefinelastomer ist.

6. Verfahren nach Anspruch 1, 2 oder 3, wobei das chlorierte Elastomer ein Epichlorhydrinelastomer ist.

7. Verfahren nach Anspruch 1, 2 oder 3, wobei die aushärtbare Zusammensetzung in Schritt i) auf eine Temperatur von 90 °C bis 170 °C erhitzt wird.

8. Verfahren nach Anspruch 1, 2 oder 3, wobei der Gegenstand aus einem thermoplastischen Material hergestellt ist.

9. Verfahren nach Anspruch 1, 2 oder 3, wobei das multifunktionelle Vernetzungsmittel ein multifunktionelles Acrylat ist.

10. Verfahren nach Anspruch 1, 2 oder 3, wobei das multifunktionelle Vernetzungsmittel ein multifunktionelles Methacrylat ist.

11. Verfahren nach Anspruch 1, 2 oder 3, wobei das chlorierte Elastomer eine Mooney-Viskosität von 10 - 90, ML 1 + 4 (121 °C) aufweist.

12. Verfahren nach Anspruch 1, 2 oder 3, wobei der Gegenstand aus einem Metall hergestellt ist.

13. Verfahren nach Anspruch 1, 2 oder 3, wobei das multifunktionelle Vernetzungsmittel Cyanurat ist.

14. Verfahren nach Anspruch 1, 2 oder 3, wobei das multifunktionelle Vernetzungsmittel ein Isocyanurat ist.

15. Verfahren nach Anspruch 1, 2 oder 3, wobei die Zusammensetzung von A) außerdem bis zu 2 Gewichtsprozent Lösungsmittel, auf das kombinierte Gewicht der Komponenten A), B) und C) der Elastomerzusammensetzung bezogen, umfasst.

16. Verfahren nach Anspruch 1, 2 oder 3, wobei die extrudierbare Elastomerzusammensetzung vor dem Absetzen auf den Gegenstand durch einen Extruder dosiert wird.

17. Ausgehärteter Gegenstand hergestellt durch das Verfahren nach Anspruch 1, 2 oder 3.

18. Ausgehärteter geformter Gegenstand hergestellt aus einer wärmbeständigen, aushärtbaren Elastomerzusammensetzung, die eine Mooney-Viskosität von 1 - 150, ML 1 + 4 (100 °C) aufweist, bestehend im Wesentlichen aus
A) 80 bis 97 Gewichtsprozent eines chlorierten Elastomers ausgewählt aus der Gruppe bestehend aus chlorierten Polyolefinelastomeren und Epichlorhydrinelastomeren;
B) 2 bis 19,5 Gewichtsprozent eines multifunktionellen Vernetzungsmittels ausgewählt aus der Gruppe bestehend aus multifunktionellen Acrylvernetzungsmitteln, multifunktionellen Methacrylvernetzungsmitteln, multifunktionellen Cyanuratvernetzungsmitteln und multifunktionellen Isocyanuratvernetzungsmitteln; und
C) 0,2 bis 5,0 Gewichtsprozent eines UV-Initiators,
wobei die Gewichsprozentsätze jeder Komponente A), B) und C) auf das kombinierte Gewicht der Komponenten A), B) und C) bezogen sind.

19. Ausgehärteter geformter Gegenstand nach Anspruch 18, wobei der geformte Gegenstand eine elastomere Abdichtung oder Dichtung ist.

20. Substrat, an das eine ausgehärtete elastomere Abdichtung oder Dichtung angebracht ist, wobei die elastomere Abdichtung oder Dichtung aus einer wärmebeständigen, aushärtbaren Elastomerzusammensetzung hergestellt ist, die eine Mooney-Viskosität von 1 - 150, ML 1 + 4 (100 °C) aufweist, bestehend im Wesentlichen aus
A) 80 bis 97 Gewichtsprozent eines chlorierten Elastomers ausgewählt aus der Gruppe bestehend aus chlorierten Polyolefinelastomeren und Epichlorhydrinelastomeren;
B) 2 bis 19,5 Gewichtsprozent eines multifunktionellen Vernetzungsmittels ausgewählt aus der Gruppe bestehend aus multifunktionellen Acrylvernetzungsmitteln, multifunktionellen Methacrylvernetzungsmitteln, multifunktionellen Cyanuratvernetzungsmitteln und multifunktionellen Isocyanuratvernetzungsmitteln; und
C) 0,2 bis 5,0 Gewichtsprozent eines UV-Initiators,
wobei die Gewichsprozentsätze jeder Komponente A), B) und C) auf das kombinierte Gewicht der Komponenten A), B) und C) bezogen sind,
wobei die elastomere Abdichtung oder Dichtung, die aus der Schmelze aufgebracht wird, direkt an Ort und Stelle auf dem Substrat gebildet wird.

21. Substrat nach Anspruch 20, wobei das Substrat ein thermoplastischer Gegenstand ist.

22. Substrat nach Anspruch 21, wobei der thermoplastische Gegenstand gerillt ist und die elastomere Abdichtung oder Dichtung in die Rille eingebracht und darin geformt wird.

23. Substrat nach einem der Ansprüche 20 bis 22, wobei das Substrat ein Fahrzeugteil ist.

## Revendications

1. Procédé d'application d'un joint à un article comprenant les étapes de
i) mélange à une température comprise entre 25°C à 250°C
A) de 80 à 97 pour cent en poids d'un élastomère chloré choisi parmi le groupe constitué des élastomères de polyoléfine chlorés et des élastomères d'épichlorohydrine;
B) 2 à 19,5 pour cent en poids d'un agent de réticulation multifonctionnel choisi parmi le groupe constitué des agents de réticulation acryliques multifonctionnels, des agents de réticulation méthacryliques multifonctionnels, des agents de réticulation cyanurates multifonctionnels, et des agents de réticulation isocyanurates multifonctionnels; et;
C) 0,2 à 5,0 pour cent en poids d'un initiateur d'UV
dans lequel les pourcentages en poids de chacun des composants A), B) et C) sont basés sur le poids combiné des composants A), B) et C) pour former un mélange extrudable, durcissable, thermiquement stable ayant une viscosité de Mooney de 1 à 150, ML 1+4 (100°C);
ii) dépôt dudit mélange extrudable sur ledit article en la forme et l'épaisseur souhaitées pour former un joint non durci; et
iii) irradiation dudit joint non durci avec un rayonnement UV sur une durée suffisante pour durcir ledit joint.

2. Procédé d'application d'un joint à un article comprenant les étapes de:
i) chauffage d'une composition élastomère extrudable, durcissable, thermiquement stable à une température de 25°C à 250°C et dépôt de la composition élastomère sur ledit article en la forme et l'épaisseur souhaitées pour former une composition de joint non durci, dans lequel la composition élastomère extrudable, durcissable, thermiquement stable a une viscosité de Mooney de 1 à 150, ML 1+4 (100°C), et consiste essentiellement en:
A) 80 à 97 pour cent en poids d'un élastomère chloré choisi parmi le groupe constitué des élastomères de polyoléfine chlorés et des élastomères d'épichlorohydrine;
B) 2 à 19,5 pour cent en poids d'un agent de réticulation multifonctionnel choisi parmi le groupe constitué des agents de réticulation acryliques multifonctionnels, des agents de réticulation méthacryliques multifonctionnels, des agents de réticulation cyanurates multifonctionnels, et des agents de réticulation isocyanurates multifonctionnels; et
C) 0,2 à 5,0 pour cent en poids d'un initiateur d'UV
dans lequel les pourcentages en poids de chacun des composants A), B) et C) sont basés sur le poids combiné des composants A), B) et C); et
ii) l'irradiation de ladite composition de joint non durci avec un rayonnement UV sur une durée suffisante pour durcir ladite composition de joint non durci.

3. Procédé de fabrication d'un joint d'étanchéité *in situ* comprenant les étapes de
i) chauffage d'une composition élastomère extrudable, durcissable, thermiquement stable à une température de 25°C à 250°C et le dépôt de la composition élastomère sur un article pour former la composition de joint d'étanchéité non durci, dans lequel la composition d'élastomère extrudable, durcissable, thermiquement stable a une viscosité de Mooney de 1 à 150, ML 1+4 (100°C), et consiste essentiellement en:
A) 80 à 97 pour cent en poids d'un élastomère chloré choisi parmi le groupe constitué des élastomères de polyoléfine chlorés et des élastomères d'épichlorohydrine;
B) 2 à 19,5 pour cent en poids d'un agent de réticulation multifonctionnel choisi parmi le groupe constitué des agents de réticulation acryliques multifonctionnels, des agents de réticulation méthacryliques multifonctionnels, des agents de réticulation cyanurates multifonctionnels, et des agents de réticulation isocyanurates multifonctionnels; et
C) 0,2 à 5,0 pour cent en poids d'un initiateur d'UV
dans lequel les pourcentages en poids de chacun des composants A), B) et C) sont basés sur le poids combiné des composants A), B) et C); et
ii) l'irradiation de ladite composition de joint d'étanchéité non durci avec un rayonnement d'UV sur une durée suffisante pour durcir ladite composition de joint d'étanchéité non durci.

4. Procédé selon l'une quelconque des revendications précédentes, dans lequel l'élastomère chloré est un élastomère de polyoléfine chloré.

5. Procédé selon la revendication 1, 2 ou 3, dans lequel l'élastomère chloré est un élastomère de polyoléfine chlorosulfoné.

6. Procédé selon la revendication 1, 2 ou 3, dans lequel l'élastomère chloré est un élastomère d'épichlorohydrine.

7. Procédé selon la revendication 1, 2 ou 3, dans lequel la composition durcissable est chauffée jusqu'à une température de 90°C à 170°C dans l'étape i).

8. Procédé selon la revendication 1, 2 ou 3, dans lequel l'article est fabriqué à partir d'un matériau thermoplastique.

9. Procédé selon la revendication 1, 2 ou 3, dans lequel l'agent de réticulation multifonctionnel est un acrylate multifonctionnel,

10. Procédé selon la revendication 1, 2 ou 3, dans lequel l'agent de réticulation multifonctionnel est un méthacrylate multifonctionnel.

11. Procédé selon la revendication 1, 2 ou 3, dans lequel l'élastomère chloré a une viscosité de Mooney de 10 à 90, ML 1 +4 (121°C).

12. Procédé selon la revendication 1, 2 ou 3, dans lequel ledit article est fabriqué à partir d'un métal.

13. Procédé selon la revendication 1, 2 ou 3, dans lequel l'agent de réticulation multifonctionnel est du cyanurate.

14. Procédé selon la revendication 1, 2 ou 3, dans lequel l'agent de réticulation multifonctionnel est un isocyanurate.

15. Procédé selon la revendication 1, 2 ou 3, dans lequel la composition de A) comprend de manière supplémentaire jusqu'à 2 pour cent en poids de solvant, basé sur le poids combiné des composants A), B) et C) de la composition élastomère.

16. Procédé selon la revendication 1, 2 ou 3, dans lequel la composition élastomère extrudable est dosée à travers une extrudeuse avant d'être déposée sur ledit article.

17. Article durci produit par le procédé selon la revendication 1, 2 ou 3.

18. Article mis en forme, durci produit à partir d'une composition élastomère durcissable, thermiquement stable, ayant une viscosité de Mooney de 1 à 150, ML 1+4 (100°C), constitué essentiellement de
A) 80 à 97 pour cent en poids d'un élastomère chloré choisi parmi le groupe constitué des élastomères de polyoléfine chlorés et des élastomères d'épichlorohydrine;
B) 2 à 19,5 pour cent en poids d'un agent de réticulation multifonctionnel choisi parmi le groupe constitué des agents de réticulation acryliques multifonctionnels, des agents de réticulation méthacryliques multifonctionnels, des agents de réticulation cyanurates multifonctionnels, et des agents de réticulation isocyanurates multifonctionnels; et
C) 0,2 à 5,0 pour cent en poids d'un initiateur d'UV
dans lequel les pourcentages en poids de chacun des composants A), B) et C) sont basés sur le poids combiné des composants A), B) et C).

19. Article durci mis en forme selon la revendication 18, dans lequel l'article durci est un joint ou un joint d'étanchéité élastomère.

20. Substrat ayant fixé à celui-ci un joint ou un joint d'étanchéité élastomère durci, le joint ou le joint d'étanchéité élastomère étant produit à partir d'une composition élastomère durcissable, thermiquement stable ayant une viscosité de Mooney de 1 à 150, ML 1+4 (100°C), essentiellement constitué de
A) 80 à 97 pour cent en poids d'un élastomère chloré choisi parmi le groupe constitué des élastomères de polyoléfine chlorés et des élastomères d'épichlorohydrine;
B) 2 à 19,5 pour cent en poids d'un agent de réticulation multifonctionnel choisi parmi le groupe constitué des agents de réticulation acryliques multifonctionnels, des agents de réticulation méthacryliques multifonctionnels, des agents de réticulation cyanurates multifonctionnels, et des agents de réticulation isocyanurates multifonctionnels; et
C) 0,2 à 5,0 pour cent en poids d'un initiateur d'UV
dans lequel les pourcentages en poids de chacun des composants A), B) et C) sont basés sur le poids combiné des composants A), B) et C).
dans lequel le joint ou le joint d'étanchéité élastomère est appliqué à partir de la masse fondue et est formé en place directement sur le substrat.

21. Substrat selon la revendication 20, dans lequel le substrat est un article thermoplastique.

22. Substrat selon la revendication 21, dans lequel l'article thermoplastique est rainuré et le joint ou le joint d'étanchéité élastomère est appliqué à l'intérieur de et est mis en forme dans la rainure.

23. Substrat selon l'une quelconque des revendications 20 à 22, dans lequel le substrat est un composant pour automobiles.
